# EUROPÄISCHE PATENTSCHRIFT

(11) **EP 1 812 768 B1**
(45) Veröffentlichungstag und Bekanntmachung des Hinweises auf die Patenterteilung: **25.05.2011**
(21) Anmeldenummer: 05803456.2
(22) Anmeldetag: 11.11.2005
(51) Int. Cl.: F28D 9/00, F28F 3/04

(54) **WÄRMETAUSCHERKANAL, KAMMPROFIL ZUR HERSTELLUNG DESSELBEN UND WÄRMETAUSCHER**
HEAT EXCHANGER CHANNEL, COMB PROFILE FOR PRODUCING THE SAME, AND CORRESPONDING HEAT EXCHANGER
CANAL D'ECHANGE THERMIQUE, PROFILE STRIE POUR LE REALISER, ET ECHANGEUR THERMIQUE

(30) Priorität: 15.11.2004 CH 18722004
(43) Veröffentlichungstag der Anmeldung: 01.08.2007
(73) Patentinhaber: Häusler, Peter, 8008 Zürich (CH)
(72) Erfinder: Häusler, Peter, 8008 Zürich (CH)
(74) Vertreter: Wenger, René
(86) Internationale Anmeldenummer: PCT/EP2005/055906
(87) Internationale Veröffentlichungsnummer: WO 2006/051102

(56) Entgegenhaltungen:
- WO-A-00/31473
- CH-A5- 692 061
- FR-A- 2 521 698
- US-A- 5 775 410

## Beschreibung

Die Erfindung betrifft ein Kammprofil für einen Wärmetauscherkanal nach dem Oberbegriff von Anspruch 1.

Wärmetauscher und Wärmetauscherkanäle dieser Art sind als Be- und Entlüftungsvorrichtungen zur Zu- und Abfuhr von Luft in einem Gebäude aus CH 692 061 oder DE-U 296 13 438 bekannt. Bei mehrgeschossigen Gebäuden wird für jedes Geschoss üblicherweise ein separater Zu- und Abluftkanal verwendet. Die Entlüftungsvorrichtungen umfassen extrudierte, kanalförmige Längsprofile enthaltend eine Vielzahl von in Profillängsrichtung verlaufenden Wänden und Rippen, welche die Kanaloberflächen vergrössern und für eine gute Wärmeübertragung von den Abluftkanälen auf die Zuluftkanäle sorgen. Die Längsprofile weisen mittig einen grossen, durch Rippen unterteilten Abluftkanal und eine Vielzahl von entlang der Aussenwand des Längsprofils sich erstreckende Zuluftkanäle auf. Die einzelnen Zuluftkanäle sind gegeneinander im Wesentlichen dicht abgeschlossen. Die durch die Rippen des Abluftkanals gebildeten kanalförmigen Unterteilungen sind gegeneinander offen. Die Rippen dienen zur Oberflächenvergrösserung und damit zur Verbesserung des Wärmeübertrags.

Durch die WO 00/31473 ist ferner ein vergleichbarer Wärmetauscherkanal im Zusammenhang mit einer Heizung mit integriertem Lüftungssystem bekannt geworden. Gemäss einer besonderen Ausführungsform können einzelne Kanaleinheiten zu einem ganzen Paket zusammengefügt werden.

Die Wärmetauscherkanäle gemäss Stand der Technik sind jeweils einstückig aus Leichtmetall extrudiert. Beim Zusammenschichten mehrerer Einzelkanäle verdoppelt sich dabei ersichtlicherweise bei den aneinanderliegenden Längswänden die Wandstärke, was einen erheblichen Materialaufwand zur Folge hat. Ausserdem sind spezielle Massnahmen für eine möglichst nahtlose und mechanisch stabile Verbindung erforderlich. Eine Anpassung der Durchströmungsquerschnitte an spezifische Verhältnisse ist somit insgesamt nur mit grossem Aufwand bzw. mit hohen Kosten möglich.

Aus US 5,775,410 ist ausserdem ein Wärmetauscher bekannt, bei dem eine wärmetauschende Membran zwischen zwei ineinanderfügbaren Elemente geklemmt wird, die gleichzeitig Kanäle zum Durchleiten von Dampf bilden.

Die Aufgabe vorliegender Erfindung ist die Bereitstellung von Kammprofilen, welche sich für den Aufbau von Wärmetauscherkanälen eignen, sowie die Angabe eines Wärmetauschers mit einem gegenüber den aus dem Stand der Technik bekannten Wärmetauschern verbesserten Wirkungsgrad und verbesserter Funktionalität. Es stellt sich außerdem die Aufgabe, einen Wärmetauscherkanal der eingangs genannten Art bereitzustellen, der vorstehende Nachteile vermeidet, kostengünstig herstellbar ist, und dessen Querschnitt auf einfache Weise den gegebenen Erfordernissen angepasst werden kann.

Die auf das Kammprofil gerichtete Aufgabe wird durch die Merkmale von Anspruch 1 gelöst. Weiterbildungen sind in den davon abhängigen Ansprüchen beschrieben.

Die Kammprofile enthalten eine Längswand mit davon abragenden, in Profillängsrichtung verlaufenden Rippen. Die Rippen können dabei von beiden Seiten der Längswand abragen oder nur von einer Seite. Die Kammprofile sind zweckmässigerweise derart gestaltet, dass durch deren Zusammenfügen eine Anzahl von gegeneinander dicht geschlossenen Längskammern gebildet wird. Die Kammprofile können auch weitere Elemente aufweisen, beispielsweise eine an der Längswand befindliche, hohlzylinderförmige Ausformung zur Leitung eines weiteren wärmeführenden Mediums, wie beispielsweise eine Kühlflüssigkeit. Eine solche hohlzylinderförmige Ausformung kann auch weiter in eine Anzahl, beispielsweise radialsymmetrisch angeordneter, zylinderförmiger Hohlräume unterteilt sein und damit ein Register einer Anzahl von Kanälen innerhalb einer solchen Ausformung bilden.

Die für den erfindungsgemässen Wärmetauscherkanal zu verwendenden Kammprofile stellen bevorzugt extrudierte, insbesondere stranggepresste Längsprofile dar. Weiter bevorzugt bestehen die Kammprofile aus Leichtmetall und insbesondere aus Aluminium oder einer Aluminiumlegierung.

Die in Profillängsrichtung im Abstand zueinander abragenden Rippen können nur von ein und derselben Wandseite der Längswand oder aber von beiden Wandseiten der Längswand abragen. Die Rippen stellen im Wesentlichen flächige Gebilde dar, welche mit der Längswand des Kammprofils einen spitzen bis rechten Winkel einschliessen. Typischerweise stellen die Rippen dünnwandige Anformungen dar, welche mit der Längswand einen ungefähr rechten Winkel einschliessen und in Profillängsrichtung verlaufen.

Das erfindungsgemässe Kammprofil weist auch eine Anzahl von Verbindungsrippen und Kupplungsnuten auf. Die Anzahl der Verbindungsrippen entspricht zweckmässigerweise der Anzahl der Kupplungsnuten. Zudem weisen die Verbindungsrippen zweckmässigerweise mehrheitlich dieselbe Höhe auf. Als Höhe einer Verbindungsrippe wird der Abstand der freien Kante der Verbindungsrippe von der Längswand bezeichnet. Die Kupplungsnuten können nutförmige Ausnehmungen aus der Längswand darstellen, oder können durch einen Zwischenraum zweier an die Längswand angeformter Federrippen gebildet werden. Die Kupplungsnuten können jedoch auch durch eine endständige, querschnittlich gabelförmige Anformung einer von der Längswand abragenden Trägerrippe gebildet werden. Hierbei weist die,freistehende Kante einer in Profillängsrichtun verlaufenden Trägerrippe zwei voneinander gespreizte Federrippen auf, wobei zwischen den beiden Federrippen die Kupplungsnut eingeschlossen wird.

Die freien Kanten der Verbindungsrippen und die Kupplungsnuten sind derart ausgebildet dass die freien Enden der Verbindungsrippen form- und/oder kraftschlüssig in die Kupplungsnuten eingreifen können. Besonders bevorzugt sind die freien Enden der Verbindungsrippen und die Kupplungsnuten derart angeordnet, dass die Kammprofile hermaphroditisch ausgebildet sind.

Eine mechanisch besonders dauerhafte und stabile Verbindung zweier Kammprofile ergibt sich, wenn die freien Enden der Verbindungsrippen mit seitlichen Schneidkanten versehen sind, welche in benachbarte Kupplungsnuten einschneidbar sind. Beim Zusammenpressen der Kammprofile unter hohem Druck dringen die Schneidkanten in die Seitenwände der Kupplungsnuten ein und deformieren sich dabei teilweise, wobei je nach Material eine Art Kaltschweissung eintritt.

Die Kupplungsnuten können im Nutengrund wenigstens teilweise ein Dichtungselement oder eine Dichtungsmasse aufweisen, damit später beim Zusammenfügen der Kammprofile eine ausreichende Gasdichtigkeit erzielt wird.

Die Verbindungsrippen und die Kupplungsnuten sind bevorzugt derart angeordnet, dass der Abstand benachbarter Verbindungsrippen bzw. Kupplungsnuten über das ganze Kammprofil gleich ist, d.h. dass die Abstände äquidistant ausgebildet sind.

Das erfindungsgemässe Kammprofil ist bevorzugt vollständig einstückig ausgebildet und stellt insbesondere ein Extrusionsprodukt dar. Ganz bevorzugt stellt das Kammprofil ein Strangpressprodukt dar. Die Kammprofile können prinzipiell aus jedem wärmeleitenden Material mit genügend hoher mechanischer Festigkeit bestehen. Bevorzugt bestehen die Kammprofile aus Metall und speziell bevorzugt aus Leichtmetall, insbesondere aus Aluminium oder einer Aluminiumlegierung.

In einer weiteren bevorzugten Ausführungsform weist die Längswand beidseitig zwischen benachbarten Verbindungsrippen bzw. zwischen benachbarten Kupplungsnuten Wärmetauscherrippen auf. Die Höhe der Rippen ist dabei geringer als die Höhe der Verbindungsrippen.

Die auf den Wärmetauscherkanal gerichtete Aufgabe wird durch die Merkmale von Anspruch 7 gelöst. Erfindungsgemässe Weiterbildungen finden sich in den davon abhängigen Ansprüchen.

Der Wärmetauscherkanal weist zumindest zwei Register auf, d.h. ein Register für die Leitung eines ersten wärmeführenden Mediums mit höherer Temepratur und ein Register für die Leitung eines zweiten wärmeführenden Mediums mit gegenüber dem ersten Medium tieferer Temperatur. Beide Register stehen in Wärmetauschkontakt. Die Leitung der Medien in den einzelnen Registern geschieht durch eine gegenläufige Strömung. Jedes Register weist zumindest einen Kanal auf. Bevorzugt weist jedes Register eine Mehrzahl von Kanälen auf. Die Anzahl der Kanäle für die einzelnen Register kann unterschiedlich gross sein. Zweckmässigerweise stehen alle benachbarten Kanäle untereinander in einem Wärme-tauschkontakt. Bevorzugt enthält ein Register eine oder mehrere Reihen von Kanälen. Eine Reihe von Kanälen wird erfindungsgemäss durch das Zusammenfügen zweier Kammprofile gebildet. Falls mehrere Reihen von Kanälen benötigt werden, können mehrere Kammprofile ineinande gesteckt bzw. zusammengefügt werden.

Der erfindungsgemässe Wärmetauscherkanal wird bevorzugt zur Durchführung der Frischluftzufuhr in Gebäuden mit gleichzeitiger Wärmerückgewinnung aus der Abluft verwendet. Dazu weist der Wärmetauscherkanal ein Register enthaltend eine Anzahl von Kanälen zur Führung der Zuluft und ein Register enthaltend eine Anzahl von Kanälen zur Führung der Abluft auf.

Für die Be- und Entlüftung mehrgeschossiger Gebäude können mehrere Wärmetauscherkanäle, d.h. beispielsweise einer pro Geschoss, verwendet werden, oder es können mehrere Geschosse mit ein und demselben Wärmetauscherkanal bedient werden. Im letzteren Fall unterscheidet sich zweckmässigerweise die Länge der für die einzelnen Geschosse verwendeten Kammprofile, d.h. für jedes Geschoss wird zumindest eine Reihe von Kanälen verwendet, wobei eine solche Kanalreihe durch das Zusammenfügen zweier Kammprofile gebildet wird.

Durch das Strangpressen können sehr lange Kammprofile hergestellt werden, so dass deren Länge gemäss der zu entlüftenden Gebäudehöhe gewählt werden kann. Die Länge der Kammprofile für die Be- und Entlüftung weiter oben liegender Gebäudeteile kann dann durch Ablängen der Kammprofile eingestellt werden. Die Länge der Wärmetauscherkanäle kann jedoch auch durch Aneinanderfügen der Stirnseiten zweier oder mehrerer Wärmetauscherkanalelemente eingestellt werden. Das Aneinanderfügen kann durch Schweissen, Löten oder durch andere aus dem Stand der Technik bekannter Mittel, wie beispielsweise mittels Flanschverbindungen, erreicht werden.

Zur Erzielung einer Gasdichtigkeit der einzelnen Kanäle bzw. der einzelnen Register sind die Fügestellen der Kammprofile wenigstens teilweise mit einem Dichtungselement oder mit einer Dichtungsmasse abgedichtet. Ersichtlicherweise müssen wenigstens die einzelnen Register gegeneinander bzw. gegenüber der Atmosphäre abgedichtet werden. Als Dichtungselement kann beispielsweise ein Dichtungsprofil, insbesondere eine Dichtungsschnur in die Fügestellen eingelegt sein. Alternativ wäre es auch denkbar, die Fügestellen vor dem Zusammenfügen der Kammprofile mit einer flüssigen oder pastösen Dichtungsmasse zu beschichten.

Die auf den Wärmetauscher gerichtete Aufgabe wird durch die Merkmale von Anspruch 11 gelöst. Erfindungsgemässe Weiterbildungen finden sich in den davon abhängigen Ansprüchen.

Der aus den zusammengefügten Kammprofilen bestehende Wärmetauscherkanal ist wenigstens auf einer der Längsseiten, auf der die Fügenähte der Kammprofile liegen mit einem Zusatzwärmetauscher versehen. Dieser Zusatzwärmetauscher enthält ein Rohrsystem, das mit der Längsseite des Wärmetauscherkanals wärmeleitend in Wirkverbindung steht. In bestimmten Fällen wäre es denkbar, dass ein derartiger Zusatzwärmetauscher an einer Längsseitenwand auch bei konventionellen Wärmetauscherkanälen gemäss dem eingangs erwähnten Stand der Technik eingesetzt werden kann.

Der Zusatzwärmetauscher weist vorteilhaft einen auf der Längsseite des Wärmetauscherkanals wärmeleitend festgelegten Wandabschnitt aus Metall auf, der das Rohrsystem trägt. Beim Wandabschnitt kann es sich um eine massive Platte, um ein Blech oder gar nur um eine Folie handeln. Das Rohrsystem, beispielsweise eine Kupferrohrschlange kann auf diesen Wandabschnitt aufgelötet oder aufgeklebt werden.

Die Verbindung des Zusatzwärmetauschers mit der Längsseite des Wärmetauscherkanals erfolgt beispielsweise durch Ankleben des wandabschnitts aus Metall mit einem wärmeleitenden Silikonkleber. Auch eine Lötverbindung wäre selbstverständlich denkbar. Die Verbindung erfolgt ausserdem vorteilhaft derart, dass alle Fügenähte an der betreffenden Längsseite durch den Wandabschnitt abgedeckt sind. Damit wird eine gegebenenfalls zusätzliche Abdichtung der Fügenähte bewirkt.

Gemäss einer alternativen Ausführungsform ist es aber auch denkbar, dass die einzelnen Rohre des Rohrsystems am Zusatzwärmetauscher in Aussparungen in der Längsseite des Wärmetauscherkanals eingelassen sind. Die Aussparungen können dabei so dimensioniert sein, dass die Rohre des Rohrsystems durch Druck eingeschnappt werden können. Der Vorteil dieser Ausführungsform besteht darin, dass keine separate Trägerwand für das Rohrsystem erforderlich ist.

Eine besonders vorteilhafte Wirkung mit dem Zusatzwärmetauscher kann erzielt werden, wenn auf beiden parallelen Längsseiten des Wärmetauscherkanals je ein Zusatzwärmetauscher angeordnet ist, wobei das Rohrsystem des einen Zusatzwärmetauschers mit der Saugleitung und das Rohrsystem des anderen Zusatzwärmetauschers mit der Druckleitung einer Wärmepumpe bzw. eines Kompressors verbunden ist. Der Wärmetauscherkanal ist dabei ersichtlicherweise sandwichartig zwischen zwei Zusatzwärmetauschern angeordnet, wobei beispielsweise auf der Abgas bzw. Abluft führenden Registerseite die Verdampferleitung der Wärmepumpe angeordnet sein kann.

Ein Zusatzwärmetauscher kann aber auch ganz generell im oder an wenigstens einem der wenigstens zwei Register des Wärmetauscherkanals in der Form eines Rohrsystems angeordnet sein, das in thermischer Wirkverbindung mit den betreffenden Register steht. So wäre es beispielsweise denkbar, innerhalb der Kammprofile Aufnahmemittel vorzusehen, an denen vor dem Zusammenfügen der Kammprofile Rohrleitungen für den Zusatzwärmetauscher angebracht werden können. Im Rohrsystem des Zusatzwärmetauschers kann je nach Temperaturniveau und Verwendungszweck ein beliebiges Fluidum zirkulieren.

Weitere Vorteile können unabhängig von der Ausgestaltung des Wärmetauschers erreicht werden, wenn das Abgas bzw. Abluft führende Register des Wärmetauscherkanals am unteren Ende über ein Schnorchelelement mit einem Brenner verbunden ist, wobei je nach Betriebszustand des Brenners die Einzelkanäle des Schnorchelelements mit Abgas bzw. mit Abluft speisbar sind. Im Idealfall sollten nämlich bei einer Heizung die Abgase möglichst unvermischt mit der Abluft in den Wärmetauscherkanal eingeführt werden. Damit soll erreicht werden, dass die im Abgas enthaltene Wärme durch Kondensation möglichst im unteren Kaminabschnitt an die Zuluft abgegeben wird und nicht über die Abluft verloren geht. Das Schnorchelelement besteht aus verlängerten Einzelrohren des Wärmetauscherkanals bzw. des Kammprofils, die in ein gemeinsames Hüllrohr ragen, welches sowohl mit der Abgasleitung als auch mit der Abluftleitung kurzgeschlossen ist. Die alternative Einspeisung von Abgas oder Abluft stellt sich jeweils in Abhängigkeit vom Betriebszustand des Brenners bzw. von dessen eigenem Brennerventilator selber ein.

Schliesslich können weitere Vorteile erreicht werden, wenn das Abgas bzw. Abluft führende Register des Wärmetauscherkanals am unteren Ende über eine Abgas-Waschvorrichtung mit einem Brenner verbunden ist. Dies ist in erster Linie bei einem Holzbrenner oder bei einem Ölbrenner erforderlich, welche beide partikelhaltige Abgase erzeugen. Die Vorteile einer auf die genannte Weise angeschlossenen Abgas-Waschvorrichtung könnten auch mit konventionellen Wärmetauschern gemäss dem eingangs beschriebenen Stand der Technik erzielt werden.

Die Abgas-Waschvorrichtung kann beispielsweise eine etwa in der Längsachse des Wärmetauscherkanals angeordnete, aufrecht stehende Waschkolonne sein. Diese enthält ein Filtermaterial mit einer grossen Oberfläche, insbesondere in der Form einer Füllkörperschüttung. Das Filtermaterial wird dabei durch rückfliessendes Kondensat aus dem Wärmetauscherkanal benetzt, sodass die durchgeleiteten Schadstoffpartikel an der Oberfläche des Filtermaterials hängen bleiben. Das Kondensat erfüllt somit auf besonders einfache Weise eine zusätzliche Funktion, bevor es entsorgt wird. Die Kondensation der Abgase verbessert auf an sich bekannte Art und Weise den Wirkungsgrad des Kessels.

Ein vorstehend beschriebener Wärmetauscherkanal kann in einem Gebäude in etwa vertikaler Lage eingebaut sein und sich insbesondere über mehrere Stockwerke erstrecken. Dabei ist es vorteilhaft, wenn er am unteren Ende auf seitlichen Konsolen gebäudeseitig abgestützt ist. Die untere Stirnseite bleibt dabei frei für den Abgriff der einzelnen Register und Kanäle. Der Wärmetauscherkanal kann mit seitlichen Auflagern versehen sein, welche mittels Zugstangen klemmend auf der Aussenseite des Wärmetauscherkanals fixiert sind. Auf die Weise müssen keinerlei Befestigungsmittels direkt in den Wärmetauscherkanal eingreifen. Ausserdem ist es vorteilhaft, wenn die Auflage auf den seitlichen Konsolen über Gewindebolzen erfolgt, sodass eine exakte Justierung bezüglich Höhe und ggf. Neigung möglich ist.

Ein vorstehend beschriebener Wärmetauscherkanal kann aber auch sehr kurz ausgebildet sein, und lediglich der Belüftung einer einzelnen Wohnung dienen. Zu diesem Zweck ist es besonders vorteilhaft, wenn wenigstens ein Register des Wärmetauscherkanals die Verbindung zwischen einem Dampfabzug und der Gebäudeaussenseite herstellt. Bei der Sanierung von Mehrfamilienhäusern ist es oft nicht möglich, die Abluft der Dampfabzüge in einer gemeinsamen vertikalen Sammelleitung abzuführen. Die Abluft der einzelnen Dampfabzüge führt daher direkt beispielsweise horizontal durch die Gebäudewand auf die Aussenseite. In diesen Fällen ist es besonders zweckmässig, wenn die Wohnungslüftung über einen erfindungsgemässen Wärmetauscherkanal erfolgt, der mit dem Dampfabzug kurzgeschlossen ist.

Ausführungsbeispiele der Erfindung sind in den Zeichnungen dargestellt und werden nachstehend genauer beschrieben. Es zeigen:
- Figur 1: einen Längsschnitt durch ein Gebäude mit einem erfindungsgemässen Wärmetauscherkanal,
- Figur 2: einen Querschnitt durch zusammengesteckte Kammprofile mit endseitigen Abschlussprofilen,
- Figur 3: das Detail X gemäss Figur 2,
- Figur 4: eine perspektivische Darstellung eines Wärme- tauscherkanals mit seitlichen Zusatzwärmetau- schern,
- Figur 5: eine schematische Darstellung eines Wärmetau- schers mit Abgas-Waschvorrichtung,
- Figur 6: der Anschluss der Abgas-Waschvorrichtung ge- mäss Figur 5 mit Hilfe eines Schnorchelele- ments,
- Figur 7a bis 7d: ein Schnorchelelement in verschiedenen Be- triebszuständen an einem Gasbrenner,
- Figuren 8a und 8b: ein weiteres Detail einer Profilverbindung vor dem Zusammenfügen und nach dem Zusammenfügen,
- Figur 9: ein Detail einer Profilverbindung nach dem Zu- sammenfügen mit eingelegtem Dichtungselement,
- Figur 10: einen Querschnitt durch ein weiteres Ausfüh- rungsbeispiel eines Wärmetauscherkanals,
- Figur 11: ein Schnitt durch eine Küche mit eingebautem Wärmetauscherkanal am Dampfabzug,
- Figur 12: eine perspektivische Darstellung der Lager- stelle eines vertikalen Wärmetauscherkanals,
- Figur 13: eine weitere schematische Darstellung eines Wärmetauscherkanals mit Zusatzwärmetauscher,
- Figur 14: ein Querschnitt durch einen Wärmetauscherkanal mit alternativer Anordnung des Zusatzwärmetau- schers,
- Figur 15: eine perspektivische Darstellung des Endab- schnitts an einem horizontalen Wärmetauscher- kanal,
- Figur 16: eine alternative Ausführungsform von Kammpro- filen, und
- Figur 17: eine weitere alternative Ausführungsform von Kammprofilen.

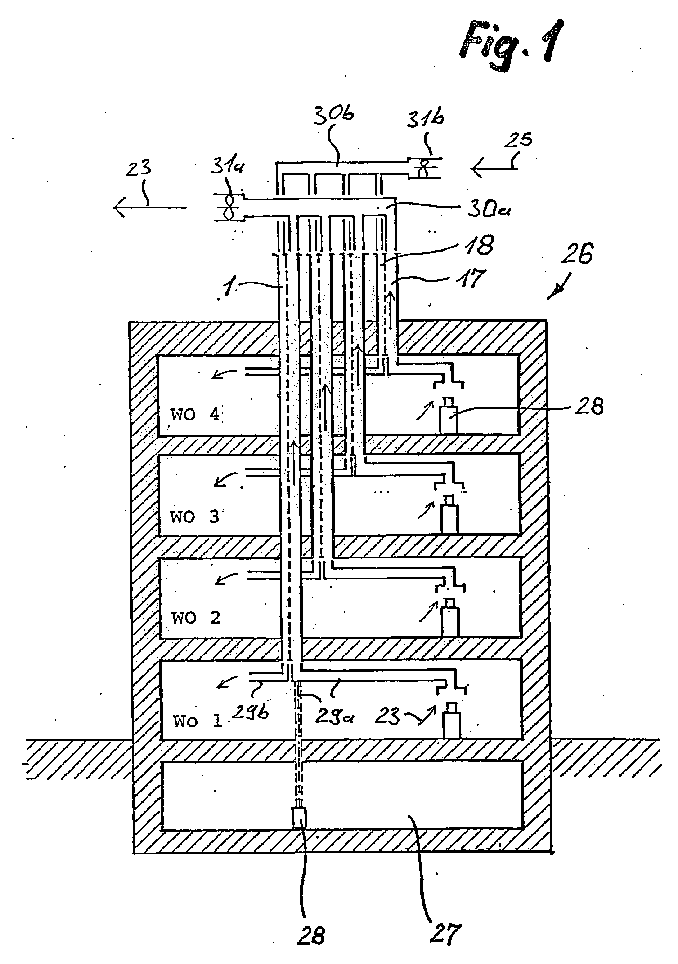

Das in Figur 1 im Längschnitt schematisch dargestellte Gebäude 26 umfasst vier Stockwerke (Wo1, Wo2, Wo3, Wo4). Ein Wärmetauscherkanal 1 versorgt jedes der vier Stockwerke. Jeder Wärmetauscherkanal enthält für jedes Stockwerk ein Abluftregister 17 und ein Zuluftregister 18. In jedem Stockwerk und im Keller 27 ist eine Abluftquelle 28 dargestellt, deren Abluft 23 mittels Verbindungsleitungen 29a in die entsprechenden Abluftregister 17 geleitet wird. Zuoberst bzw. über dem Gebäudekörper werden die Abluftregister 17 in einer Sammelleitung 30a zusammengefasst, so dass die Abluft 23 beispielsweise mittels einem gemeinsamen Ventilator 31a aus der Sammelleitung ins Freie geblasen wird. Zuluft 25 wird mittels einem weiteren Ventilator 31b in eine zweite Sammelleitung 30b eingesaugt, wobei sich die Zuluft dann in die sich an die Sammelleitung 30b anschliessenden, vertikal verlaufenden Zuluftregister 18 verteilt. Über die für jedes Stockwerk separat geführten Zuluftregister 18 wird den einzelnen Stockwerken Frischluft 25 über Verbindungsleitungen 29b zugeführt. Alle Wärmetauscherkanäle 1 bilden zusammen eine Art Kamin, in dem einerseits die Zu- und Abluft geführt wird, und andererseits auch eine entsprechende Wärmerückgewinnung stattfindet.

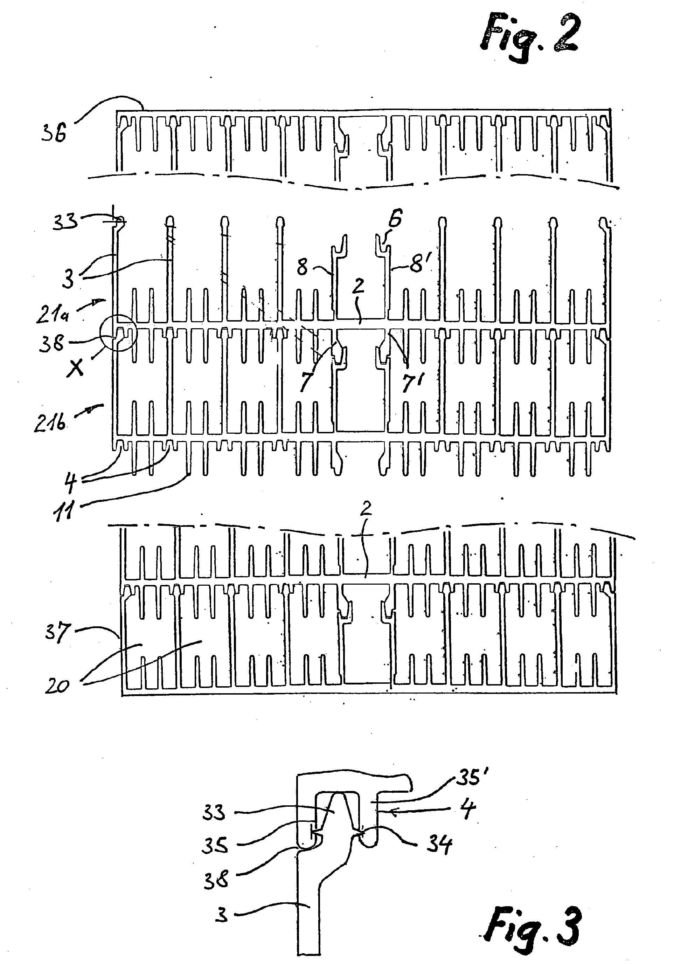

Der Wärmetauscherkanal gemäss Figur 2 besteht aus wenigstens zwei Kammprofilen 21a, 21b. Jedes Kammprofil verfügt über eine Längswand 2, an welcher Verbindungsrippen 3 im rechten Winkel angeordnet sind. Auf der gegenüberliegenden Seite der Längswand 2 sind bei jeder Verbindungsrippe 3 Kupplungsnuten 4 angeordnet, welche den Rippenkopf 33 einer anzuschliessenden Verbindungsrippe 3 aufnehmen können. In der Mitte der Längswand 2 sind je zwei kurze Mittelrippen 7, 7' und zwei lange Mittelrippen 8, 8' angeordnet. Die langen Mittelrippen 8, 8' tragen dabei endständig eine Kupplungsnut 6.

Zwischen den einzelnen Verbindungsrippen 3 sind auf beiden Seiten der Längswand 2 zusätzliche Wärmetauscherrippen 11 angeordnet, welche den Wärmefluss verbessern. Jedes einzelne Kammprofil ist einstückig aus Leichtmetall, beispielsweise aus Aluminium oder aus einer Aluminiumlegierung extrudiert.

Zur Erzielung eines flächigen Abschlusses sind schmale Abschlussprofile 36 und breite Abschlussprofile 37 vorgesehen, deren Verbindung mit einem normalen Kammprofil 21a bzw. 21b auf die gleiche Weise erfolgt, wie die beiden Kammprofile untereinander.

Zum Zusammenfügen der Kammprofile bzw. der Abschlussprofile werden diese unter hohem mechanischen Druck zusammengepresst. Wie aus Figur 3 ersichtlich ist, können dabei die Rippenköpfe 33 mit Schneidkanten 34 versehen sein, welche sich in die Flanken 35 der jeweiligen Kupplungsnuten 4 einschneiden. Auf diese Weise entstehen spaltfreie und praktisch gas- bzw. flüssigkeitsdichte Fügenähte 38.

Die zusammengesetzten Kammprofile bilden ersichtlicherweise einzelne Kanäle 20, die in beliebiger Anordnung und Reihenfolge jeweils ein gemeinsames Register für ein Medium bilden können, das im Gleichstrom oder im Gegenstrom mit einem anderen Register geführt wird.

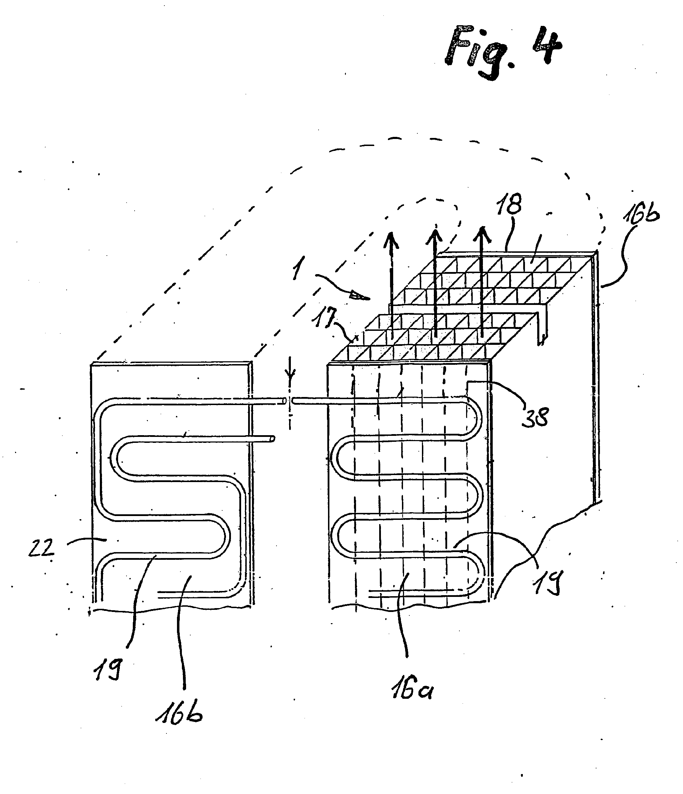

Figur 4 zeigt schematisch einen Wärmetauscherkanal 1 mit je einem Abgas- bzw. Abluftregister 17 und einem Zuluftregister 18. Dieser Wärmetauscherkanal ist beispielsweise mit den Kammprofilen gemäss Figur 2 aufgebaut. Auf den beiden Längsseitenwänden, auf denen die Fügenähte 38 der einzelnen Kammprofile angeordnet sind, ist je ein Zusatzwärmetauscher 16a, 16b angeordnet. Zum besseren Verständnis ist der Zusatzwärmetauscher 16b in die Ebene des Zusatzwärmetauschers 16a umgeklappt dargestellt.

Jeder Zusatzwärmetauscher verfügt über einen Wandabschnitt 22 aus Metall, der sich über die ganze Breite der Längsseitenwand des Wärmetauscherkanals erstreckt und damit die Fügenähte 38 überdeckt. Ein Rohrsystem 19 beispielsweise in der Form einer Kupferrohrschlange ist auf dem Wandabschnitt angelötet oder angeklebt. Der Wandabschnitt ist seinerseits mit wärmeleitfähigem Silikonkleber am Wärmetauscherkanal angeklebt. Die Zusatzwärmetauscher stehen vorteilhaft mit einer Wärmepumpe in Wirkverbindung. Selbstverständlich ist es aber auch denkbar, die Zusatzwärmetauscher zu einem anderen Zweck, z.B. zum Vorwärmen von Brauchwasser zu benutzen.

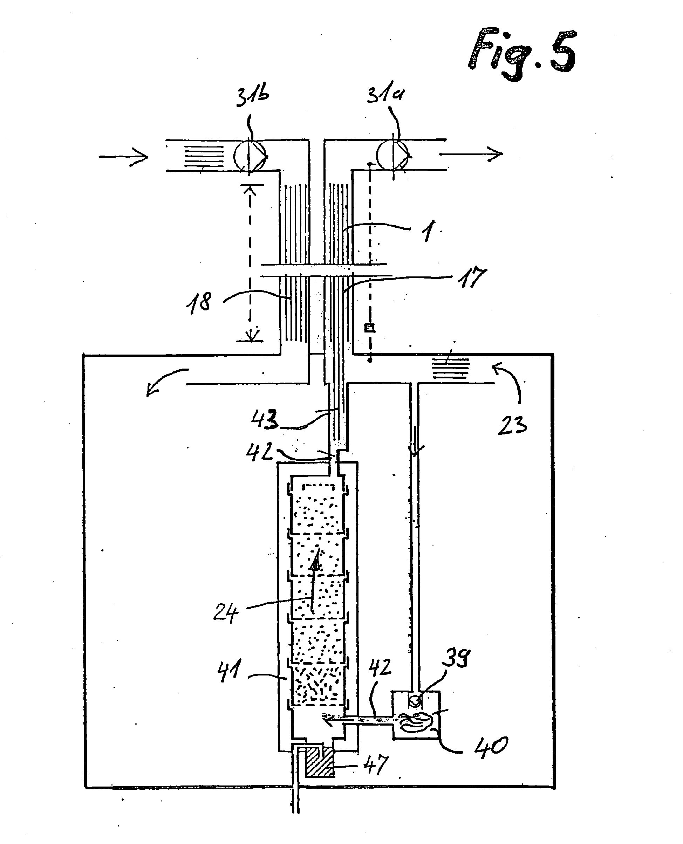

Figur 5 zeigt wiederum schematisch einen Wärmetauscher in einem Gebäude mit einem Wärmetauscherkanal 1. Im Gegensatz zu Figur 1 ist hier aber auch noch eine Heizvorrichtung beispielsweise mit einem Ölbrenner 40 integriert. Das Abluft- bzw. Abgasregister 17 ist über eine Abgas-Waschvorrichtung 41 mit dem Ölbrenner 40 verbunden. Diese besteht aus einer aufrecht stehenden Kolonne die mit Schüttkörpern gefüllt ist. Eine Abgasleitung 42 führt vom Brenner 40 ans untere Ende der Kolonne. Der mit einem eigenen Ventilator 39 versehene Brenner 40 bläst die heissen Abgase 24 durch die Kolonne, in welcher Schadstoffpartikel zurückgehalten werden. Das sich im Register 17 bildende Kondensat befeuchtet permanent die Schüttung in der Waschvorrichtung 41. Überschüssiges Kondensat wird im Kondensat-Sammelbehälter 47 aufgefangen und über eine Überlaufleitung entsorgt.

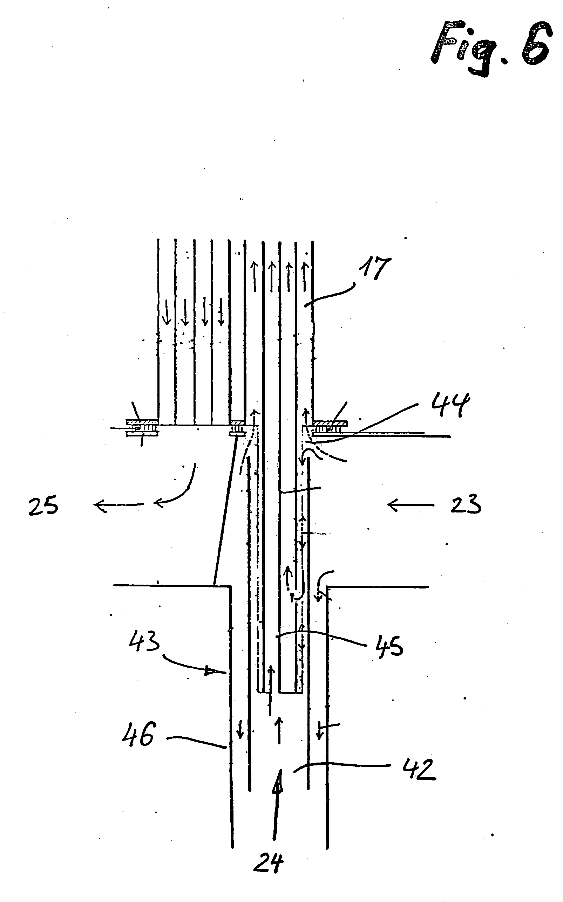

Zwischen der Waschvorrichtung 41 und dem Register 17 ist ein Abluftschnorchel 43 angeordnet, dessen Funktion in Figur 6 genauer dargestellt ist und der es ermöglicht, Abluft 23 aufzunehmen und zusammen mit den gereinigten Abgasen 24 dem Register 17 zuzuführen. Abluft und Abgase werden dabei mit einem gemeinsamen Ventilator 31a angesaugt.

Wie in Figur 6 dargestellt, besteht der insgesamt mit 43 bezeichnete Abluftschnorchel aus mehreren verlängerten Einzelrohren 45 des Abluftregisters 17, welche in ein gemeinsames Mantelrohr 46 ragen. Dieses ist sowohl mit der Abluft 23, als auch mit den Abgasen 24 bzw. mit den diesbezüglichen Leitungen kurzgeschlossen. Dabei stellt sich je nach Betriebszustand des Brenners teilweise über die Öffnungen 44 ein unterschiedlicher Befüllungsgrad der einzelnen Leitungen mit Abluft bzw. mit Abgas ein. Ersichtlicherweise stellt der Schnorchel auch sicher, dass Kondensat in jedem Fall gegen die Abgasleitung und eine allenfalls angeschlossene Waschvorrichtung (Figur 5) zurückfliesst und nicht in die Abluftleitung eindringt.

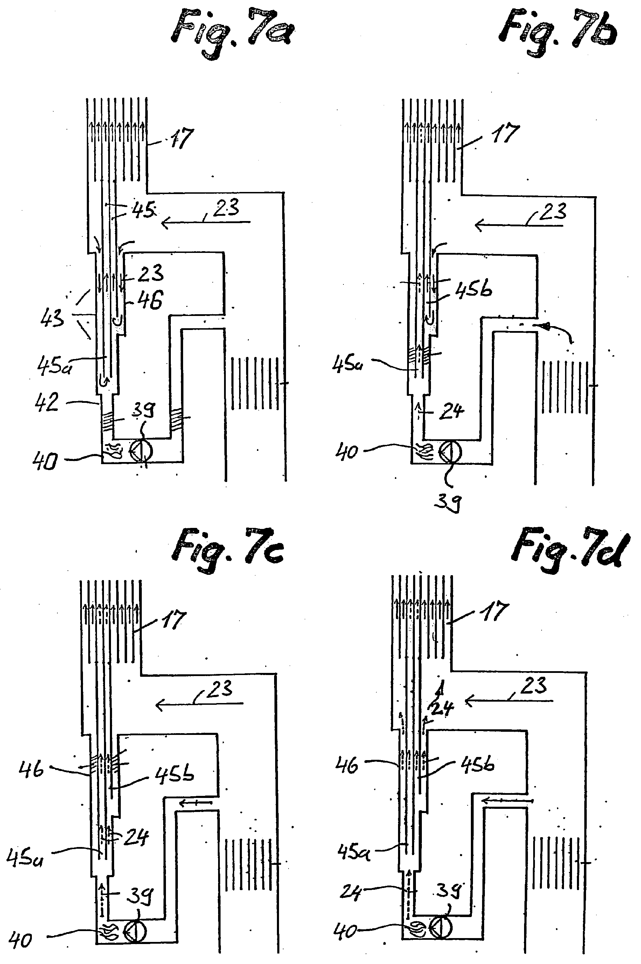

In den Figuren 7a bis 7d ist schematisch ein erfindungsgemässer Wärmetauscher-Kanal bzw. dessen Abluftregister 17 dargestellt, das über einen Schnorchel 43 mit einem Gasbrenner 40 und mit der Verbindungsleitung für Abluft 23 verbunden ist. Eine Abgaswaschvorrichtung fehlt, weil diese bei einem Gasbrenner nicht erforderlich ist.

Der Gasbrenner verfügt über einen eigenen Brennerventilator 39, der bei Bedarf einen Teil der Abluft 23 ansaugt und dem Brenner zuführt. Der Schnorchel 43 verfügt bei diesem Ausführungsbeispiel über insgesamt zwei verlängerte Einzelrohre 45, welche abgestuft in das Mantelrohr 46 ragen. Dadurch entstehen insgesamt drei voneinander getrennte Kanalquerschnitte.

Gemäss Figur 7a steht der Brennerventilator 39 still und der Brenner 40 ist nicht in Betrieb. In der Abgasleitung 42 herrscht somit keine Strömung und auch die verlängerten Schnorchelrohre 45 werden über die Rückströmung im Mantelrohr 46 mit Abluft 23 gefüllt.

Gemäss Figur 7b ist der Brenner 40 in Betrieb und der Brennerventilator 39 läuft auf einer niedrigen Leistungsstufe, bei welcher gerade so viel Abgas 24 produziert wird, wie ein einzelnes Schnorchelrohr 45 aufnehmen kann. In der Abbildung ist dies das längere Schnorchelrohr 45a, während das kürzere Schnorchelrohr 45b nach wie vor mit Abluft gespeist wird.

Gemäss Figur 7c arbeitet der Brennerventilator 39 auf einer höheren Leistungsstufe, bei welcher beide Schnorchelrohre 45a und 45b vollständig mit Abgas gefüllt werden. Im Mantelrohr 46 herrscht jetzt überhaupt keine Rückströmung mehr und die gesamte verbleibende, also nicht dem Brenner 40 zugeführte Abluft 23 strömt direkt in das Abluftregister 17.

Schliesslich zeigt Figur 7d einen Betriebszustand des Brenners bei maximaler Leistungsstufe, die nur ausnahmsweise erreicht wird. Auch das Mantelrohr 46 ist jetzt mit Abgas gefüllt, das sich jedoch wiederum mit der restlichen Abluft 23 vermischt und auf diese Weise über das Abluftregister 17 abgeführt wird. Dieser Zustand ist an sich unerwünscht, weil durch die Vermischung von Abgas und Abluft eine Kondensation nicht mehr bzw. erst im obersten Kaminabschnitt stattfinden kann. Die Kondensationswärme bzw. zumindest ein Teil davon geht somit dem Wärmetauscher verloren.

Selbstverständlich kann je nach Leistungsvermögen bzw. Ausgestaltung mit der gesamten Anlage das Schnorchelelement 43 eine unterschiedliche Anzahl von Schnorchelrohren aufweisen. Neben einem reinen passiven, nur mit dem Differenzdruck arbeitenden System, wäre es selbstverständlich auch möglich, die einzelnen Kanäle des Abluftregisters 17 mit ansteuerbaren Ventilen zu versehen, die je nach Betriebszustand des Brenners betätigt werden.

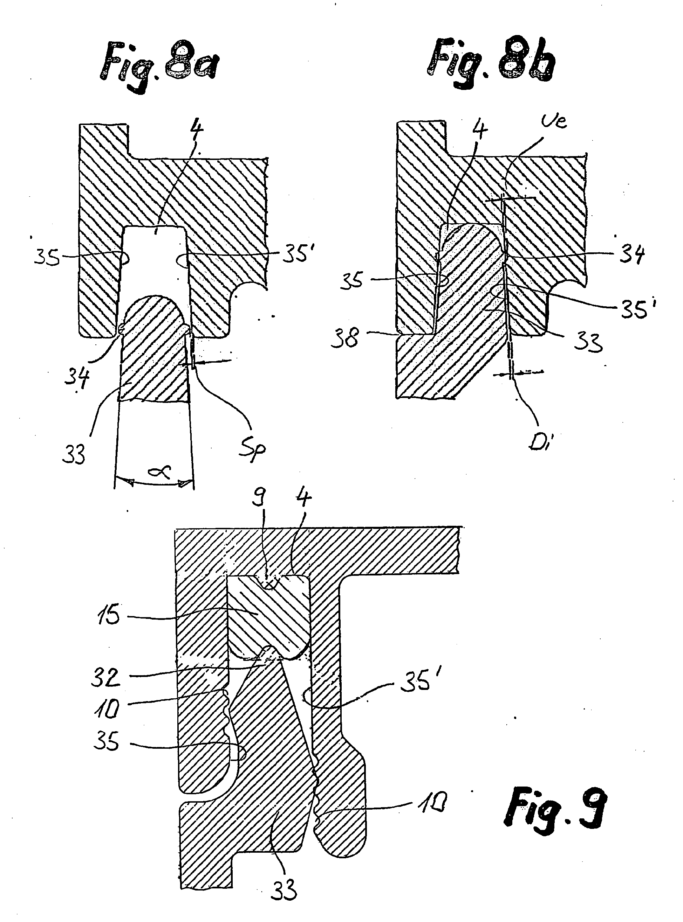

Die Figuren 8a und 8b zeigen analog zu Figur 3 ein abgewandeltes Ausführungsbeispiel einer Verbindung zwischen zwei Kammprofilen im Detail. Der Rippenkopf 33 verjüngt sich dabei etwa im gleichen Winkel α wie die beiden Flanken 35, 35' der Kupplungsnut 4. Dieser Winkel kann beispielsweise etwa 10° betragen. Am oberen Ende des Rippenkopfs 33 sind die beiden Schneidkanten 34 angeordnet, die im Gegensatz zum Ausführungsbeispiel gemäss Figur 3 jedoch nicht scharfkantig, sondern als feine Rippen ausgebildet sind.

Figur 8a zeigt den Rippenkopf 33 unmittelbar vor dem Einpressen in die Kupplungsnut 4, jedoch bereits im einzentrierten Zustand. Zwischen den Flanken 35, 35' und den Schneidkanten 34 besteht dabei in dieser Position ein geringes Spiel Sp.

Figur 8b zeigt den Rippenkopf 33 im eingepressten Zustand. Die Schneidkanten 34 greifen dabei mit einem geringen Übermass Ue in die Flanken 35, 35' der Kupplungsnut 4. Zwischen den Aussenwänden des Rippenkopf 33 und den Flanken kann bei eine geringe Distanz Di verbleiben. Es ist aber auch denkbar, dass diese Wandabschnitte flächig aneinander anliegen. Es bildet sich in jedem Fall eine gas- und flüssigkeitsdichte Fügenaht 38.

Figur 9 zeigt ein weiteres Ausführungsbeispiel einer Verbindung zwischen zwei Kammprofilen im Detail. Der Rippenkopf 33 ist dabei an seinem Ende mit einer gerundeten Spitze 32 ausgebildet. Die beiden Flanken 35 und 35' der Kupplungsnut 4 sind an ihren Enden mit Längsrillen 10 versehen, welche die reibschlüssige Verbindung begünstigen. Im Nutengrund der Kupplungsnut 4 ist ausserdem eine Längsrippe 9 angeordnet, welche der gerundeten Spitze 32 etwa gegenüberliegt. Um eine möglichst gasdichte Fügestelle zu erzielen, ist im Nutengrund eine Dichtungsschnur 15 beispielsweise aus Moosgummi eingelegt, die sich beim Einpressen des Rippenkopfs 33 deformiert und die zwischen der Längsrippe 9 und der gerundeten Spitze 32 hermetisch abdichtet.

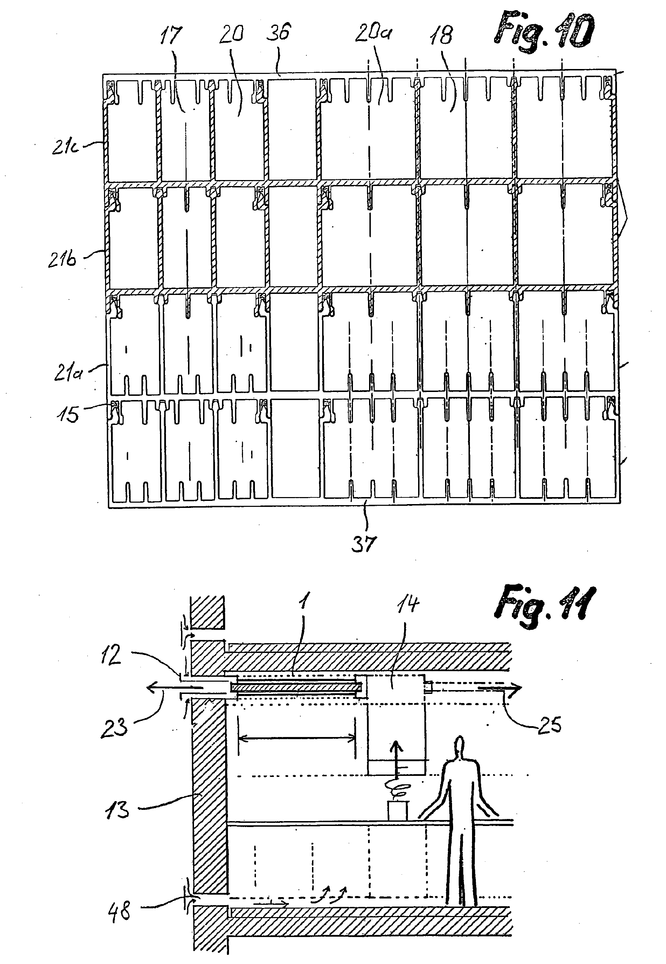

Figur 10 zeigt analog zu Figur 2 ein alternatives Ausführungsbeispiel eines Wärmetauscherkanals bestehend aus den Kammprofilen 21a, 21b und 21c, einem schmalen Abschlussprofil 36 und einem breiten Abschlussprofil 37. Die Abluftregister 17 bzw. die Zuluftregister 18 sind asymmetrisch angeordnet, d.h. die einzelnen Kanäle 20 des Abluftregisters 17 sind schmaler als die einzelnen Kanäle 20a des Zuluftregisters 18. Die Abdichtung mit Hilfe von Dichtungsschnüren 15 erfolgt nur an denjenigen Fügestellen, welche die einzelnen Register begrenzen.

Figur 11 zeigt schematisch den Einsatz eines erfindungsgemässen Wärmetauscherkanals 1 in einer Küche. Ein Register des Wärmetauscherkanals ist an die Abluft eines Dampfabzugs 14 angeschlossen, wobei die Abluft 23 durch das Mauerwerk 13 direkt seitlich ins Freie geführt wird. Gleichzeitig wird über ein Anschlusselement 12 durch das zweite Register Zuluft 25 in den Raum geführt. Über eine zusätzliche Öffnung 48 im Mauerwerk kann bei Bedarf eine Nachströmung erfolgen. Der verhältnismässig kurze Wärmetauscherkanal 1 kann besonders einfach in der Küchenkombination, beispielsweise über einem Hochschrank untergebracht werden. Anstelle der horizontalen Anordnung wäre auch eine vertikale Anordnung, beispielsweise entlang einer Innenwand denkbar. Bei Dachwohnungen könnte der Wärmetauscherkanal auch über die Decke direkt ins Freie geführt werden. Auf die gleiche Art und Weise könnten mit einer derartigen Kurzvariante des Wärmetauscherkanals auch Badezimmer oder andere Räume belüftet werden, bei denen ohnehin Abluftleitungen erforderlich sind.

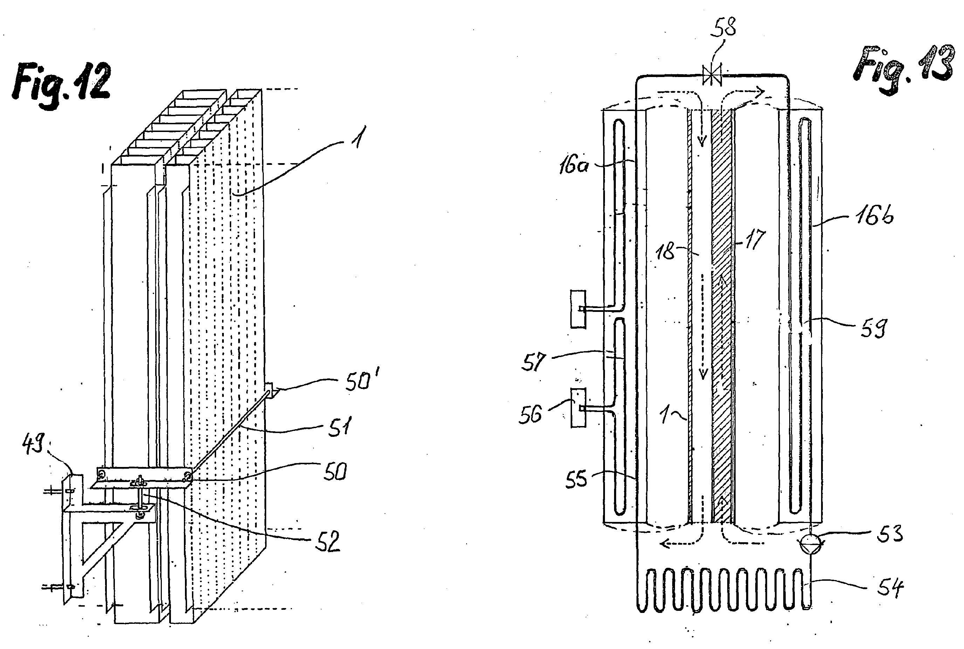

Figur 12 zeigt die Lagerung eines vertikal angeordneten Wärmetauscherkanals 1, der sich ggf. einstückig über mehrere Stockwerke erstreckt. Am unteren Ende des Wärmetauscherkanals, also beispielsweise im Bereich des Kellers sind Lagerkonsolen 49 am Mauerwerk befestigt, die sich auf beide Seiten des Wärmetauscherkanals erstrecken. Am Wärmetauscherkanal selbst sind zwei seitliche Lagerschienen 50 und 50' über ein Paar Zugstangen 51 festgeklemmt. Diese Anordnung hat den Vorteil, dass am Wärmetauscherkanal keinerlei Bohrungen oder dergleichen angebracht werden müssen. Die Lagerschienen liegen nicht direkt auf den Konsolen auf, sondern sind mittels Gewindebolzen 52 mit diesen verbunden. An den Gewindebolzen kann der Wärmetauscherkanal in der Höhe noch über eine bestimmte Distanz justiert werden. Die Montage eines derartigen Wärmetauscherkanals erfolgt am Gebäude vorteilhaft mit Hilfe eines Krans, der den entsprechend vorbereiteten Kanal von oben auf die Konsolen 49 absetzen kann. Diese Art der Montage ist ersichtlicherweise schnell und kostengünstig.

Figur 13 zeigt schematisch die gebäudeinterne Wärme-Kälte-Kopplung mit Hilfe eines erfindungsgemässen Wärmetauscherkanals 1 mit seitlich angeordneten Zusatzwärmetauschern 16a, 16b. Aus Gründen der besseren Darstellbarkeit sind die beiden Zusatzwärmetauscher um 90° in die Bildebene umgeklappt. In Wirklichkeit sind diese auf beiden Seiten des Wärmetauscherkanals 1 angeordnet und zwar analog zu Figur 4 je auf einer Stirnseite des Abluftregisters 17 bzw. des Zuluftregisters 18. Diese beiden Zusatzwärmetauscher bilden einen geschlossenen Kreislauf mit einem Kompressor 53 und einem Reduktionsventil 58. Der Zusatzwärmetauscher 16a ist auf der Seite des Zuluftregisters 18 angeordnet und enthält eine Kondensatorleitung 55, die von einem Heizkreiskondensator 54 am Ausgang des Kompressors 53 zum Reduktionsventil 58 führt. In den Zusatzwärmetauscher 16a eingekoppelt sind auch noch die Kühlgerätekreisläufe 57 (Kondensatorkreisläufe) von Kühlgeräten 56. Der Zusatzwärmetauscher 16b ist auf der Seite des Abluftregisters 17 angeordnet und er enthält eine Verdampferleitung 59, die vom Reduktionsventil 58 zum Kompressor 53 führt. Dieser Mehrfachwärmetauscher steigert ersichtlicherweise die Effizienz des Wärmehaushalts in einem Gebäude.

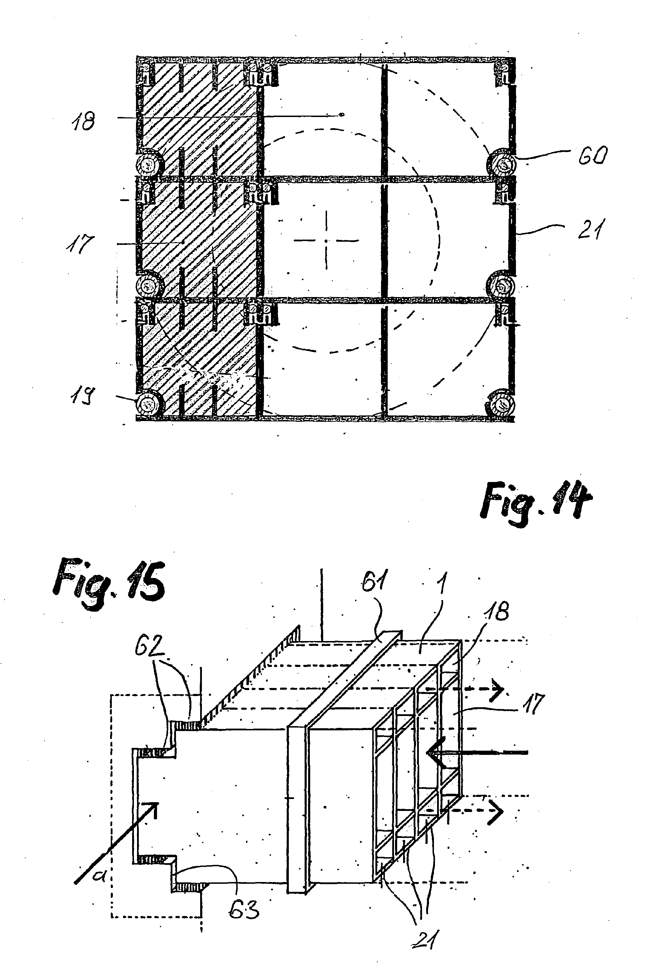

Der in Figur 14 im Querschnitt dargestellte Wärmetauscherkanal verfügt über ein Abluftregister 17 und ein Zuluftregister 18. Jedes Register ist wie oben beschrieben mit einem Zusatzwärmetauscher gekoppelt, wobei das Rohrsystem 19 dieser Zusatzwärmetauscher direkt in die jeweiligen Kammprofile integriert ist. Zu diesem Zweck sind die einzelnen Kammprofile 21 mit Aussparungen 60 versehen, in welche die Rohre des Rohrsystems eingeschnappt werden können. Der Vorteil dieser Bauweise besteht darin, dass die Zusatzwärmetauscher die Breite der ganzen Einheit nicht vergrössern. Das Rohrsystem 19 verläuft in der Gesamtanordnung in Längsrichtung vertikal (ähnlich wie in Figur 13), was jedoch beispielsweise für die Verdampfung einer Wärmetauscherflüssigkeit keine Rolle spielt.

Figur 15 zeigt den Endabschnitt einer horizontal gelagerten Kurzversion eines Wärmetauscherkanals 1 beispielsweise in der Einbausituation gemäss Figur 11. Die einzelnen Kammprofile 21 sind nicht fest zusammen gepresst, sondern werden mit Hilfe von Verbindungsbügeln 61 zusammen gehalten. Das ganze Paket kann seitlich in Pfeilrichtung a in eine Auflagenische 63 eingeschoben werden, in welche mit Hilfe von Registerabdichtungen 62 das Abluftregister 17 und das Zuluftregister 18 abgedichtet werden. Auf der hier nicht dargestellten, gegenüberliegenden Seite des Wärmetauscherkanals, also beispielsweise am Dampfabzug kann die Lagerung auf ähnliche Weise erfolgen. Ersichtlicherweise kann der ganze Wärmetauscherkanal auf diese Weise leicht ausgebaut und gereinigt werden.

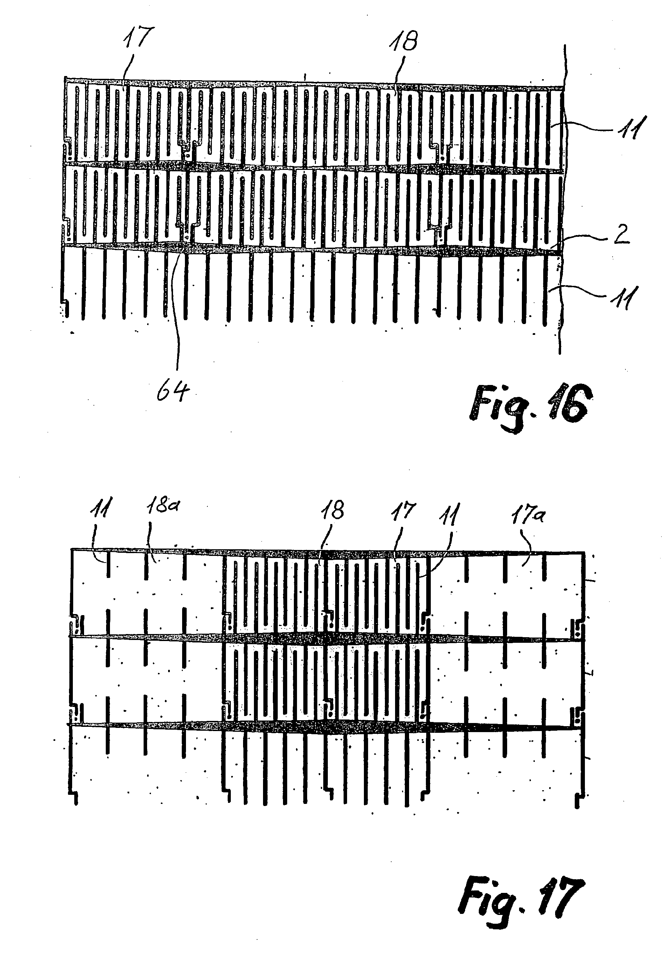

Figur 16 zeigt im Querschnitt Kammprofile, deren Wärmetauscherrippen 11 im zusammen gebauten Zustand sehr nahe beieinander liegen und sich gegenseitig fast vollständig überlappen. Ersichtlicherweise entsteht so ein labyrinthartiger Kanal mit einer sehr grossen Oberfläche für das Zuluftregister 18 bzw. das Abluftregister 17. Im Bereich der dichtenden Abgrenzung zwischen den Registern ist die Längswand 2 mit einer Verdickung 64 versehen, welche sich gegen beide Seiten mit zunehmendem Abstand verjüngt. Ein derart gebildeter Wärmetauscherkanal eignet sich vor allem für die vorstehend beschriebene Kurzversion, weil auch bei einer relativ geringen Tauscherlänge noch ein genügend hoher Tauscherwirkungsgrad erzielt wird. Eine periodische Reinigung ist durch Zerlegen der Kammprofile möglich.

Im weiteren Ausführungsbeispiel von Kammprofilen gemäss Figur 17 sind die Wärmetauscherrippen 11 so angeordnet, dass sie sich lediglich bei einem der beiden Register 17 oder 18 fast vollständig gegenseitig überlappen. Eine derartige Ausgestaltung kann vor allem bei der Kurzversion eines erfindungsgemässen Wärmetauscherkanals besonders vorteilhaft sein. Das Abluftregister 17 weist eine grosse Wärmetauscheroberfläche auf und eignet sich für geringe Fördergeschwindigkeiten von beispielsweise maximal 3 m/s. Beim Abluftregister 17a werden grössere Luftmengen mit einer Geschwindigkeit von beispielsweise 6 m/s gefördert also z.B. bei einem aktivierten Dampfabzug, wobei die Wärmerückgewinnung keine überragende Rolle spielt. Dementsprechend wird im Abluftregister 17a auch keine besonders grosse Oberfläche gefordert. Dementsprechend sind auch die Zuluftregister 18 und 18a für unterschiedliche Zuluftmengen ausgestaltet. Die Dauerlüftung beispielsweise über einen Dampfabzug erfolgt somit über die beiden Register 17 und 18, während bei eingeschalteter Dampfabzugsfunktion noch die Zusatzregister 17a und 18a zugeschaltet werden.

## Patentansprüche

1. Kammprofil, zur Herstellung eines Wärmetauscherkanals (1), mit einer Längswand (2) mit im Abstand zueinander angeordneten, von der Längswand abragenden, in Profillängsrichtung verlaufenden Rippen, **dadurch gekennzeichnet dass** die Längswand (2) Verbindungsrippen (3) und Kupplungsnuten (4, 6) aufweist, wobei die freien Enden der Verbindungsrippen (3) in die Kupplungsnuten (4, 6) eines benachbarten Kammprofils form- und/oder kraftschlüssig aufnehmbar sind.

2. Kammprofil nach Anspruch 1, **dadurch gekennzeichnet, dass** die Kupplungsnuten (4, 6) als Zwischenraum zwischen zwei direkt an der Längswand (2) oder endständig an einer von der Längswand (2) abragenden Rippe (8, 8') angeformten Flanken (35, 35') ausgebildet sind.

3. Kammprofil nach einem der Ansprüche 1 oder 2, **dadurch gekennzeichnet, dass** das Kammprofil aus Leichtmetall besteht und vollständig einstückig, insbesondere als Strangpressprodukt, ausgebildet ist.

4. Kammprofil nach einem der Ansprüche 1 bis 3, **dadurch gekennzeichnet, dass** die Längswand (2) beidseitig zwischen benachbarten Verbindungsrippen bzw. zwischen benachbarten Kupplungsnuten Wärmetauscherippen (11) aufweist, deren Höhe kleiner ist als die Höhe der Verbindungsrippen.

5. Kammprofil nach einem der Ansprüche 1 bis 4, **dadurch gekennzeichnet, dass** die freien Enden der Verbindungsrippen mit seitlichen Schneidkanten versehen sind, welche in benachbarte Kupplungsnuten einschneidbar sind.

6. Kammprofil nach einem der Ansprüche 1 bis 5, **dadurch gekennzeichnet, dass** die Kupplungsnuten im Nutengrund ein Dichtungselement oder eine Dichtmasse aufweisen.

7. Wärmetauscherkanal, welcher wenigstens zwei Register mit mindestens je einem Kanal (20) zur gegenläufigen Führung wärmeführender Medien unterschiedlicher Temperatur aufweist, wobei die Kanäle (20) in Wärmetauschkontakt miteinander stehen, **dadurch gekennzeichnet, dass** die Kanäle (20) zumindest teilweise aus ineinander gefügten Kammprofilen (21) gemäss mindestens einem der Ansprüche 1-6 gebildet sind.

8. Wärmetauscherkanal nach Anspruch 7, **dadurch gekennzeichnet, dass** die durch das Ineinanderfügen der Kammprofile (21) gebildeten Kanäle (20) gegeneinander gasdicht ausgebildet sind.

9. Wärmetauscherkanal nach einem der Ansprüche 7 oder 8, **dadurch gekennzeichnet, dass** er wenigstens ein Register enthaltend eine Mehrzahl von Kanälen (20) zur Führung der Zuluft (25) von Bauten und wenigstens ein Register enthaltend eine Mehrzahl von Kanälen (20) zur Führung der Abluft (23) von Bauten aufweist.

10. Wärmetauscherkanal nach einem der Ansprüche 7 bis 9, **dadurch gekennzeichnet, dass** die Fügestellen der Kammprofile wenigstens teilweise mit einem Dichtungselement oder mit einer Dichtungsmasse abgedichtet sind.

11. Wärmetauscher, enthaltend einen Wärmetauscherkanal (1), nach einem der Ansprüche 7 bis 10, **dadurch gekennzeichnet, dass** auf wenigstens einer der Längsseiten des Wärmetauscherkanals (1) auf der die Fügenähte der Kammprofile liegen ein Zusatz-Wärmetauscher (16) angeordnet ist, der ein mit der Längsseite des Wärmetauscherkanals (1) wärmeleitend verbundenes Rohrsystem (19) enthält.

12. Wärmetauscher nach Anspruch 11, **dadurch gekennzeichnet, dass** der Zusatz-Wärmetauscher (16) einen auf der Längsseite des Wärmetauscherkanals (1) wärmeleitend festgelegten Wandabschnitt (22) aus Metall aufweist, auf dem das Rohrsystem (19) angeordnet ist.

13. Wärmetauscher nach Anspruch 12, **dadurch gekennzeichnet, dass** der Wandabschnitt (22) aus Metall mittels einem wärmeleitenden Silikonkleber derart an der Längsseite des Wärmetauscherkanals (1) festgelegt ist, dass alle Fügenähte abgedeckt sind.

14. Wärmetauscher nach Anspruch 11, **dadurch gekennzeichnet, dass** die einzelnen Rohre des Rohrsystems am Zusatz-Wärmetauscher in Aussparungen in der Längsseite des Wärmetauscherkanals eingelassen sind.

15. Wärmetauscher nach einem der Ansprüche 11 bis 14, **dadurch gekennzeichnet, dass** auf beiden parallelen Längsseiten des Wärmetauscherkanals je ein Zusatzwärmetauscher angeordnet ist, wobei das Rohrsystem des einen Zusatzwärmetauschers mit der Saugleitung und das Rohrsystem des anderen Zusatzwärmetauschers mit der Druckleitung einer Wärmepumpe bzw. eines Kompressors verbunden ist.

16. Wärmetauscher, nach einem der Ansprüche 11 bis 15, **dadurch gekennzeichnet, dass** das Abgas bzw. Abluft führende Register (17) des Wärmetauscherkanals am unteren Ende über ein Schnorchel-Element (43) mit einem Brenner (39) verbunden ist, wobei je nach Betriebszustand des Brenners die Einzelkanäle des Schnorchel-Elements mit Abgas bzw. mit Abluft speisbar sind.

17. Wärmetauscher, nach einem der Ansprüche 11 bis 16, **dadurch gekennzeichnet, dass** das Abgas- bzw. Abluft führende Register (17) des Wärmetauscherkanals am unteren Ende über eine Abgas-Waschvorrichtung (41) mit einem Brenner (39) verbunden ist.

18. Wärmetauscher nach Anspruch 19, **dadurch gekennzeichnet, dass** die Abgas-Waschvorrichtung (41) eine etwa in der Längsachse des Wärmetauscherkanals angeordnete, aufrecht stehende Waschkolonne ist, die ein Filtermaterial, insbesondere in Form einer Füllkörperschüttung enthält, wobei das Filtermaterial durch rückfliessendes Kondensat aus dem Wärmetauscherkanal benetzbar ist.

19. Wärmetauscherkanal nach einem der Ansprüche 7 bis 10, der in einem Gebäude in etwa vertikaler Lage eingebaut ist und sich insbesondere über mehrere Stockwerke erstreckt, wobei er am unteren Ende auf seitlichen Konsolen abgestützt ist.

20. Wärmetauscherkanal nach einem der Ansprüche 7 bis 10, der in einem Gebäude eingebaut ist und durch ein Register die Verbindung zwischen einem Dampfabzug und der Gebäudeaussenseite herstellt.

21. Wärmetauscher, enthaltend einen Wärmetauscherkanal (1) nach einem der Ansprüche 7 bis 10, **dadurch gekennzeichnet, dass** in oder an wenigstens einem der wenigstens zwei Register des Wärmetauscherkanals eine Zusatzwärmetauscher in der Form eines Rohrsystems angeordnet ist, das in thermischer wirkverbindung mit dem betreffenden Register steht.

## Claims

1. Comb profile for producing a heat exchanger duct (1), with a longitudinal wall (2) having ribs which are arranged at a distance from one another and project from the longitudinal wall and which run in the profile longitudinal direction, **characterized in that** the longitudinal wall (2) has connecting ribs (3) and coupling grooves (4, 6), the free ends of the connecting ribs (3) being receivable positively and/or non-positively in the coupling grooves (4, 6) of an adjacent comb profile.

2. Comb profile according to Claim 1, **characterized in that** the coupling grooves (4, 6) are formed as an interspace between two flanks (35, 35') shaped directly on the longitudinal wall (2) or at the end on a rib (8, 8') projecting from the longitudinal wall (2).

3. Comb profile according to either one of Claims 1 and 2, **characterized in that** the comb profile consists of light metal and is formed completely in one piece, in particular as an extruded product.

4. Comb profile according to one of Claims 1 to 3, **characterized in that** the longitudinal wall (2) has on both sides, between adjacent connecting ribs or between adjacent coupling grooves, heat exchanger ribs (11), the height of which is smaller than the height of the connecting ribs.

5. Comb profile according to one of Claims 1 to 4, **characterized in that** the free ends of the connecting ribs are provided with lateral cutting edges which can be cut into adjacent coupling grooves.

6. Comb profile according to one of Claims 1 to 5, **characterized in that** the coupling grooves have in the groove bottom a sealing element or sealing compound.

7. Heat exchanger duct which has at least two registers, each with at least one duct (20), for the contradirectional guidance of heat-carrying media of different temperature, the ducts (20) being in heat exchange contact with one another, **characterized in that** the ducts (20) are formed at least partially from comb profiles (21) according to at least one of Claims 1-6 which are joined together one in the other.

8. Heat exchanger duct according to Claim 7, **characterized in that** the ducts (20) formed by the comb profiles (21) being joined together one in the other are designed to be gas-tight with respect to one another.

9. Heat exchanger duct according to either one of Claims 7 and 8, **characterized in that** it has at least one register containing a plurality of ducts (20) for guiding the incoming air (25) of buildings and at least one register containing a plurality of ducts (20) for guiding the outgoing air (23) of buildings.

10. Heat exchanger duct according to one of Claims 7 to 9, **characterized in that** the joining points of the comb profiles are sealed off at least partially by means of a sealing element or by means of a sealing compound.

11. Heat exchanger containing a heat exchanger duct (1) according to one of Claims 7 to 10, **characterized in that**, on at least one of the longitudinal sides of the heat exchanger duct (1) on which the joining seams of the comb profiles lie, an additional heat exchanger (16) is arranged, which contains a tube system (19) connected heat-conductively to the longitudinal side of the heat exchanger duct (1).

12. Heat exchanger according to Claim 11, **characterized in that** the additional heat exchanger (16) has a wall portion (22) made from metal, which is fixed heat-conductively on the longitudinal side of the heat exchanger duct (1) and on which the tube system (19) is arranged.

13. Heat exchanger according to Claim 12, **characterized in that** the wall portion (22) made from metal is fixed to the longitudinal side of the heat exchanger duct (1) by means of a heat-conducting silicone adhesive in such a way that all the joining seams are covered.

14. Heat exchanger according to Claim 11, **characterized in that** the individual tubes of the tube system on the additional heat exchanger are introduced into clearances in the longitudinal side of the heat exchanger duct.

15. Heat exchanger according to one of Claims 11 to 14, **characterized in that** an additional heat exchanger is arranged on each of the two parallel longitudinal sides of the heat exchanger duct, the tube system of one additional heat exchanger being connected to the suction line and the tube system of the other additional heat exchanger to the delivery line of a heat pump or of a compressor.

16. Heat exchanger according to one of Claims 11 to 15, **characterized in that** the register (17), carrying exhaust gas or outgoing air, of the heat exchanger duct is connected at the lower end to a burner (39) via a snorkel element (43), the individual ducts of the snorkel element being capable of being fed with exhaust gas or with outgoing air, depending on the operating state of the burner.

17. Heat exchanger according to one of Claims 11 to 16, **characterized in that** the register (17), carrying exhaust gas or outgoing air, of the heat exchanger duct is connected at the lower end to a burner (39) via an exhaust-gas scrubbing device (41).

18. Heat exchanger according to Claim 17, **characterized in that** the exhaust-gas scrubbing device (41) is an upright scrubbing column which is arranged approximately in the longitudinal axis of the heat exchanger duct and which contains a filter material, in particular in the form of a filler packing, the filter material being capable of being wetted by condensate flowing back out of the heat exchanger duct.

19. Heat exchanger duct according to one of Claims 7 to 10, which is installed in an approximately vertical position in a building and extends, in particular, over a plurality of storeys, the said heat exchanger duct being supported on lateral brackets at the lower end.

20. Heat exchanger duct according to one of Claims 7 to 10, which is installed in a building and by means of a register makes the connection between a vapour outlet and the outside of the building.

21. Heat exchanger containing a heat exchanger duct (1) according to one of Claims 7 to 10, **characterized in that**, in or on at least one of the at least two registers of the heat exchanger duct, an additional heat exchanger is arranged which is in the form of a tube system operatively connected thermally to the respective register.

## Revendications

1. Profil strié pour la fabrication d'un canal d'échangeur de chaleur (1), comprenant une paroi longitudinale (2) comprenant des nervures disposées à distance les unes des autres, saillant depuis la paroi longitudinale, s'étendant dans la direction longitudinale du profil, **caractérisé en ce que** la paroi longitudinale (2) présente des nervures de connexion (3) et des rainures de connexion (4, 6), les extrémités libres des nervures de connexion (3) pouvant être reçues par engagement par correspondance géométrique et/ou par force dans les rainures de connexion (4, 6) d'un profil strié adjacent.

2. Profil strié selon la revendication 1, **caractérisé en ce que** les rainures de connexion (4, 6) sont réalisées sous forme d'espace interne entre deux flancs (35, 35') formés directement sur la paroi longitudinale (2) ou en position d'extrémité sur une nervure (8, 8') saillant depuis la paroi longitudinale (2).

3. Profil strié selon l'une quelconque des revendications 1 ou 2, **caractérisé en ce que** le profil strié se compose d'un métal léger et est réalisé complètement d'une seule pièce, notamment sous forme de produit profilé filé.

4. Profil strié selon l'une quelconque des revendications 1 à 3, **caractérisé en ce que** la paroi longitudinale (2) présente, des deux côtés entre des nervures de connexion adjacentes ou entre des rainures de connexion adjacentes, des nervures d'échangeur de chaleur (11) dont la hauteur est inférieure à la hauteur des nervures de connexion.

5. Profil strié selon l'une quelconque des revendications 1 à 4, **caractérisé en ce que** les extrémités libres des nervures de connexion sont pourvues d'arêtes de coupe latérales, qui peuvent être entaillées dans des rainures de connexion adjacentes.

6. Profil strié selon l'une quelconque des revendications 1 à 5, **caractérisé en ce que** les rainures de connexion dans la base de la rainure présentent un élément d'étanchéité ou une masse d'étanchéité.

7. Canal d'échangeur de chaleur, qui présente au moins deux registres avec au moins un canal respectif (20) pour le guidage mutuel de fluides caloporteurs à différentes températures, les canaux (20) étant en contact d'échange thermique les uns avec les autres, **caractérisé en ce que** les canaux (20) sont formés au moins en partie de profils striés (21) assemblés les uns dans les autres, selon au moins l'une quelconque des revendications 1 à 6.

8. Canal d'échangeur de chaleur selon la revendication 7, **caractérisé en ce que** les canaux (20) formés par l'assemblage les uns dans les autres des profils striés (21) sont réalisés de manière mutuellement étanche aux gaz.

9. Canal d'échangeur de chaleur selon l'une quelconque des revendications 7 ou 8, **caractérisé en ce qu'**il présente au moins un registre contenant une pluralité de canaux (20) pour le guidage de l'air d'amenée (25) de constructions et au moins un registre contenant une pluralité de canaux (20) pour guider l'air d'évacuation (23) de constructions.

10. Canal d'échangeur de chaleur selon l'une quelconque des revendications 7 à 9, **caractérisé en ce que** les points d'assemblage des profils striés sont au moins en partie étanchés avec un élément d'étanchéité ou avec une masse d'étanchéité.

11. Echangeur de chaleur, contenant un canal d'échangeur de chaleur (1), selon l'une quelconque des revendications 7 à 10, **caractérisé en ce qu'**un échangeur de chaleur supplémentaire (16) est disposé sur au moins l'un des côtés longitudinaux du canal d'échangeur de chaleur (1) sur lequel sont situés les joints d'assemblage des profils striés, lequel échangeur de chaleur supplémentaire contient un système de tubes (19) connecté de manière thermoconductrice au côté longitudinal du canal d'échangeur de chaleur (1).

12. Echangeur de chaleur selon la revendication 11, **caractérisé en ce que** l'échangeur de chaleur supplémentaire (16) présente une portion de paroi (22) en métal fixée de manière thermoconductrice sur le côté longitudinal du canal d'échangeur de chaleur (1), sur laquelle est disposé le système de tubes (19).

13. Echangeur de chaleur selon la revendication 12, **caractérisé en ce que** la portion de paroi (22) en métal est fixée au moyen d'une colle au silicone thermoconductrice au côté longitudinal du canal d'échangeur de chaleur (1) de telle sorte que tous les joints d'assemblage soient couverts.

14. Echangeur de chaleur selon la revendication 11, **caractérisé en ce que** les tubes individuels du système de tubes sont encastrés sur l'échangeur de chaleur supplémentaire dans des évidements dans le côté longitudinal du canal d'échangeur de chaleur.

15. Echangeur de chaleur selon l'une quelconque des revendications 11 à 14, **caractérisé en ce que** sur les deux côtés longitudinaux parallèles du canal d'échangeur de chaleur, est disposé à chaque fois un échangeur de chaleur supplémentaire, le système de tubes d'un échangeur de chaleur supplémentaire étant connecté à la conduite d'aspiration et le système de tubes de l'autre échangeur de chaleur supplémentaire étant connecté à la conduite de pression d'une pompe à chaleur ou d'un compresseur.

16. Echangeur de chaleur selon l'une quelconque des revendications 11 à 15, **caractérisé en ce que** le registre (17) du canal d'échangeur de chaleur guidant le gaz d'échappement ou l'air d'évacuation est connecté à l'extrémité inférieure par le biais d'un élément schnorchel (43) à un brûleur (39), les canaux individuels de l'élément schnorchel pouvant être alimentés en gaz d'échappement ou en air d'évacuation en fonction de l'état de fonctionnement du brûleur.

17. Echangeur de chaleur selon l'une quelconque des revendications 11 à 16, **caractérisé en ce que** le registre (17) du canal d'échangeur de chaleur guidant le gaz d'échappement ou l'air d'évacuation est connecté à l'extrémité inférieure par le biais d'un dispositif de purification des gaz d'échappement (41) à un brûleur (39).

18. Echangeur de chaleur selon la revendication 17, **caractérisé en ce que** le dispositif de purification des gaz d'échappement (41) est une colonne de purification placée debout, disposée approximativement dans l'axe longitudinal du canal d'échangeur de chaleur, qui contient un matériau filtrant, notamment sous forme de charge de remplissage en vrac, le matériau filtrant pouvant être mouillé par un condensat de reflux provenant du canal d'échangeur de chaleur.

19. Canal d'échangeur de chaleur selon l'une quelconque des revendications 7 à 10, qui est incorporé dans un bâtiment approximativement dans une position verticale, et qui s'étend notamment sur plusieurs étages, celui-ci étant supporté à son extrémité inférieure sur des consoles latérales.

20. Canal d'échangeur de chaleur selon l'une quelconque des revendications 7 à 10, qui est incorporé dans un bâtiment et qui établit la connexion entre une évacuation de vapeur et le côté extérieur du bâtiment par le biais d'un registre.

21. Echangeur de chaleur contenant un canal d'échangeur de chaleur (1) selon l'une quelconque des revendications 7 à 10, **caractérisé en ce que** dans ou sur au moins l'un des au moins deux registres du canal d'échangeur de chaleur, est disposé un échangeur de chaleur supplémentaire en forme de système de tubes, qui est en liaison fonctionnelle thermique avec le registre en question.
